# EUROPÄISCHE PATENTSCHRIFT

(11) **EP 2 727 642 B1**
(45) Veröffentlichungstag und Bekanntmachung des Hinweises auf die Patenterteilung: **26.12.2018**
(21) Anmeldenummer: 13190617.4
(22) Anmeldetag: 29.10.2013
(51) Int. Cl.: B01D 53/26

(54) **Entfeuchtungsgerät für ein gasförmiges Medium**
Dehumidifying device for a gaseous medium
APPAREIL DE DÉSHUMIDIFICATION POUR FLUIDE GAZEUX

(30) Priorität: 31.10.2012 DE 102012021306; 20.11.2012 DE 102012022650
(43) Veröffentlichungstag der Anmeldung: 07.05.2014
(73) Patentinhaber: Elmeko GmbH + Co. KG, 56479 Liebenscheid (DE)
(72) Erfinder: Herr, Burkhard, 57299 Burbch (DE)
(74) Vertreter: Grosse, Wolf-Dietrich Rüdiger

(56) Entgegenhaltungen:
- EP-B1- 1 791 413
- US-A- 5 119 640
- US-A1- 2012 000 283

## Beschreibung

Die Erfindung betrifft ein Entfeuchtungsgerät für ein gasförmiges Medium, insbesondere Luft, gemäß dem Oberbegriff des Patentanspruchs 1. Das Entfeuchtungsgerät weist eine Kühleinrichtung auf zum Kühlen des gasförmigen Mediums und eine Kondensatwanne zum Auffangen von aus dem gasförmigen Medium kondensierten Kondenswassers.

Die Erfindung betrifft weiterhin einen Schaltschrank für elektronische Komponenten mit einem derartigen Entfeuchtungsgerät sowie die Verwendung des Schaltschrankes mit dem Entfeuchtungsgerät in einer drehbaren Windturbine eines Windkraftrades.

Entfeuchtungsgeräte für Luft sind im Stand der Technik grundsätzlich hinlänglich bekannt, so z. B. aus den Druckschriften US 6,490,874 B2; WO 2012/094062 A1; US 5,555,732; WO 2011/067290 A1; WO 2008/092449 A2; US 5,375,421; US 5,884,486; EP 1 283 975 B1; D 196 09 687 A1 oder US 7,000,490 B1.

Für die vorliegende Erfindung jedoch besonders relevant erscheinen die beiden europäischen Patentschriften EP 1 546 553 B1 und EP 1 791 413 B1 sowie die US 2012/0 000 283 A1 und die US 5,119,640.

Die europäische Patentschrift EP 1 546 553 B1 offenbart einen Schaltschrank für eine Windturbine mit wenigstens einem in dem Schaltschrank untergebrachten Schaltungselement und einer Trocknungsanordnung, um Wasserabscheidung auf dem wenigstens einen Schaltungselement zu verhindern. Zur Lösung dieser Aufgabe sieht die Erfindung vor, die Trocknungsanordnung mit einer Vorrichtung zum Erzeugen eines Luftstromes zu versehen, wobei der Luftstrom in den Bereich des wenigstens einen Schaltungselementes geleitet wird.

Die europäische Patentschrift EP 1 791 413 B1 offenbart ein Entfeuchtungsgerät für einen Schaltschrank, welcher beispielsweise im Turmkopf einer Windkraftanlage angeordnet ist. Das Entfeuchtungsgerät für die Luft in dem Schaltschrank umfasst eine Kühleinrichtung, welche beispielsweise aus Peltier-Elementen gebildet ist. Es ist eine Kondensatwanne in Form eines Kondensatringes zum Auffangen von anfallendem Kondenswasser vorgesehen. Die Kondensatwanne bzw. der Kondensatring verfügt über einen Überlaufschutz, z. B. in Form eines eingezogenen Wannenrandabschnittes.

Die US-Schriften US 5,119,640 A und US 2012/0 000 283 A1 offenbaren ein Entfeuchtungsgerät gemäß dem Oberbegriff des Patentanspruchs 1.

Ausgehend von diesem Stand der Technik liegt der Erfindung die Aufgabe zugrunde, ein bekanntes Entfeuchtungsgerät sowie einen Schaltschrank mit einem derartigen Entfeuchtungsgerät dahingehend weiterzubilden, dass der Wirkungsgrad des Entfeuchtungsgerätes weiter verbessert wird.

Diese Aufgabe wird durch den Gegenstand des Anspruchs 1 gelöst. Dieser ist dadurch gekennzeichnet, dass die Auslassöffnung ein Lamellengitter aufweist, in welchem die Lamellen parallel zueinander und mit einem spitzen Winkel α gegenüber der Bodenplatte geneigt angeordnet ist, so dass sich der spitze Winkel zu dem ersten und zweiten Steg hin öffnet.

Durch das Strömungsführungselement wird unter der Haube ein Kanal für die durch die Einlassöffnung unter die Haube und in das Innere der Kondensatwanne eintretende Luft gebildet. Das Strömungsführungselement ist so angeordnet, dass die durch das Innere der Kondensatwanne geleitete Luft nahe entlang den Innenseiten des Randes und der Bodenplatte der Kondensatwanne geleitet wird. Auf diese Weise wird vorteilhafterweise sichergestellt, dass die in das Entfeuchtungsgerät eintretende Luft einen guten bzw. engen Kontakt zu dem gekühlten Rand und der gekühlten Bodenplatte der Kondensatwanne hat und auf diese Weise eine wirkungsvolle Abkühlung der durchströmenden Luft erfolgen kann. Vorteilhafterweise kondensiert dabei das in dem gasförmigem Medium bzw. in der Luft enthaltene Wasser an den Innenseiten des Randes und der Bodenplatte zu Kondenswasser. Durch die Führung der Strömung der Luft mit Hilfe der Strömungsführungselemente entlang der Innenseiten des Randes und der Bodenplatte der Kondensatwanne werden die Abkühlung der Luft und damit das Auskondensieren des Wassers und damit schließlich der Wirkungsgrad des Entfeuchtungsgerätes deutlich verbessert.

Die Auslassöffnung der Haube für den Luftstrom weist ein Lamellengitter auf, in welchem die Lamellen parallel zueinander und mit einem spitzen Winkel α gegenüber der Bodenplatte geneigt angeordnet sind, so dass sich der spitze Winkel zu dem ersten und dem zweiten Steg hin öffnet. Diese spezielle Anordnung der Lamellen bewirkt, dass die Luftströmung beim Austritt aus der Haube in einer Strömungsrichtung entsprechend dem besagten spitzen Winkel geführt wird. Dies wiederum hat zur Konsequenz, dass die Luftströmung gezwungen wird, möglichst lange entlang der Bodenplatte zu strömen, um dann in die Strömungsrichtung entsprechend dem spitzen Winkel α in Richtung Auslassöffnung überzugehen. Auf diese Weise wird vorteilhafterweise auch erreicht, dass die gegenüber den Strömungsführungselementen entfernt liegenden Bereiche der Kondensatwanne auch von der Luftströmung umflossen werden und auf diese Weise die Kontaktfläche der Luft mit Bereichen der gekühlten Kondensatwanne vergrößert und verlängert wird. Insofern tragen auch die Lamellen zu einer Verbesserung des Wirkungsgrades Entfeuchtungsgerätes bei.

Erfindungsgemäß ist die Einlassöffnung in der Haube so angeordnet, dass - wenn die Haube über der Kondensatwanne angeordnet ist - das gasförmige Medium im Bereich des Randes zumindest an einer Stelle in das Innere der Kondensatwanne eintritt. Ein erstes Strömungsführungselement in Form eines ersten Steges ist an der Haube derart befestigt, dass es - wenn die Haube über der Kondensatwanne angeordnet ist - in geringem Abstand zumindest näherungsweise parallel zu dem Rand der Kondensatwanne verlaufend in die Kondensatwanne hineinragt. Aufgrund dieser Anordnung ist der erste Steg geeignet zum Leiten der Strömung des durch die Einlassöffnung unter die Haube eintretenden gasförmigen Mediums entlang der Innenseite des Randes der Kondensatwanne in Richtung auf die Bodenplatte der Kondensatwanne hin. Die Vorteile dieser ersten Ausgestaltung entsprechen den oben mit Bezug auf die Lösung der Aufgabe genannten Vorteilen.

Weiterhin ist vorgesehen, dass ein zweites Strömungsführungselement in Form eines zweiten Steges vorgesehen ist, welcher im Wesentlichen parallel zu dem ersten Steg verlaufend weiter zur Mitte der Haube und der Kondensatwanne hin versetzt an der Haube befestigt ist.

Während das erste Strömungsführungselement die oben beschriebene Aufgabe hat, die eintretende Strömung entlang des Randes der Kondensatwanne zu führen, dient das zweite Strömungsführungselement dazu, zu verhindern, dass sich - in Strömungsrichtung gesehen - hinter dem ersten Strömungsführungselement ein Wirbel ausbildet, welcher bewirken würde, dass sich die Luftströmung bereits hinter dem ersten Strömungsführungselement wieder von der Bodenplatte ablösen und in Richtung Ausgangsöffnung strömen würde. Insofern bewirkt das zweite Strömungsführungselement vorteilhafterweise einen längeren Verbleib der Luftströmung im Bereich der gekühlten Bodenplatte der Kondensatwanne und es trägt auf diese Weise zu einer Erhöhung des Wirkungsgrades des Entfeuchtungsgerätes bei.

Sowohl das erste wie auch das zweite Strömungsführungselement sind, wenn die Haube über der Kondensatwanne angeordnet ist und die Strömungsführungselemente von der Haube herabhängen, in ihrer Länge so begrenzt, dass sie beabstandet zur Bodenplatte sind, also die Bodenplatte nicht berühren. Mit dieser Konstruktion wird sichergestellt, dass die im Inneren der Kondensatwanne strömende Luft nahe entlang der gekühlten Bodenplatte strömen kann.

Das erste und das zweite Strömungsführungselement sind auf dem Strömungsweg des gasförmigen Mediums zwischen der Einlassöffnung und der Auslassöffnung angeordnet.

Der Wirkungsgrad des Entfeuchtungsgerätes kann weiterhin dadurch gesteigert werden, dass stromaufwärts oder stromabwärts der Auslassöffnung ein erstes Gebläse angeordnet ist zum Erzeugen oder Verstärken der Strömung des gasförmigen Mediums im Inneren der Kondensatwanne durch Ansaugen des gasförmigen Mediums durch die Einlassöffnung unter die Haube und in die Kondensatwanne.

Gemäß einem weiteren Ausführungsbeispiel kann zwischen dem Lamellengitter und dem ersten Gebläse ein Luftfilter angeordnet sein.

Gemäß einem weiteren Ausführungsbeispiel kann ein Dichtungsring aus Gummi oder einem ähnlichen Material vorgesehen sein zum Aufsetzen auf das der Bodenplatte abgewandte freie Ende des Randes der Kondensatwanne und zum Ausbilden eines zum Inneren der Kondensatwanne hin eingezogenen Randes der Kondensatwanne. Optional kann der Rand nicht nur radial zum Inneren der Kondensatwanne, sondern - beabstandet zu den Rändern - auch zur Bodenplatte hin eingezogen sein. Der eingezogene Rand verhindert vorteilhafterweise ein Überschwappen von Kondenswasser aus der Kondensatwanne, wenn die Kondensatwanne bei Einbau in einem rotierenden Schaltschrank, wie dies beispielsweise bei Windturbinen von Windkraftanlagen der Fall ist, mitrotiert.

Der Dichtungsring kann weiterhin ausgebildet sein, die Außenseite des Randes der Kondensatwanne zu bedecken. Dadurch wird verhindert, dass sich Kondenswasser an der Außenseite des Randes niederschlägt und sich unerwünschterweise im Außenbereich der Kondensatwanne ansammelt.

Die Kühleinrichtung kann beispielsweise aus mindestens einem Peltier-Element gebildet sein, wobei dann vorteilhafterweise auf der Kaltseite die Kondensatwanne und auf der Warmseite ein Kühlkörper mit jeweils einem wärmeleitenden Übergang zur Kühleinrichtung angeordnet sind. Dem Kühlkörper kann ein zweites Gebläse zugeordnet sein zum Unterstützen der Abfuhr von Wärme von dem Kühlkörper bzw. von der Warmseite der Kühleinrichtung.

Die oben genannte Aufgabe wird weiterhin durch einen Schaltschrank für elektronische Komponenten mit dem erfindungsgemäßen Entfeuchtungsgerät gelöst. Dabei ist es vorteilhaft, wenn die Kondensatwanne mit der Haube, zumindest jedoch die Einlassöffnung für das gasförmige Medium, in das Innere des Schaltschranks hineinragt und der Kühlkörper für die Kühleinrichtung außerhalb des Schaltschrankes angeordnet ist. Mit dieser Anordnung der einzelnen Komponenten des Entfeuchtungsgerätes wird sichergestellt, dass die Luft in dem Schaltschrank entfeuchtet bzw. getrocknet wird und dass die elektronischen Komponenten und deren Funktionsweise nicht durch feuchte Umgebungsluft negativ beeinflusst werden.

Vorteilhafterweise wird der Schaltschrank bei einer drehbaren Windturbine verwendet, wobei der Schaltschrank die elektronischen Komponenten aufweist zum Umformen bzw. Aufbereiten der von der Windturbine gelieferten elektrischen Energie.

Der Beschreibung sind insgesamt drei Figuren beigefügt, wobei
Figur 1 das erfindungsgemäße Entfeuchtungsgerät;
Figur 2 die Kühleinrichtung mit der Kondensatwanne und dem erfindungsgemäßen Dichtungsring; und
Figur 3 die Kühleinrichtung mit der Kondensatwanne ohne den Dichtungsring zeigt.

Die Erfindung wird nachfolgend anhand von Ausführungsbeispielen unter Bezugnahme auf die genannten Figuren detailliert beschrieben. In allen Figuren sind gleiche technische Merkmale mit gleichen Bezugszeichen bezeichnet.

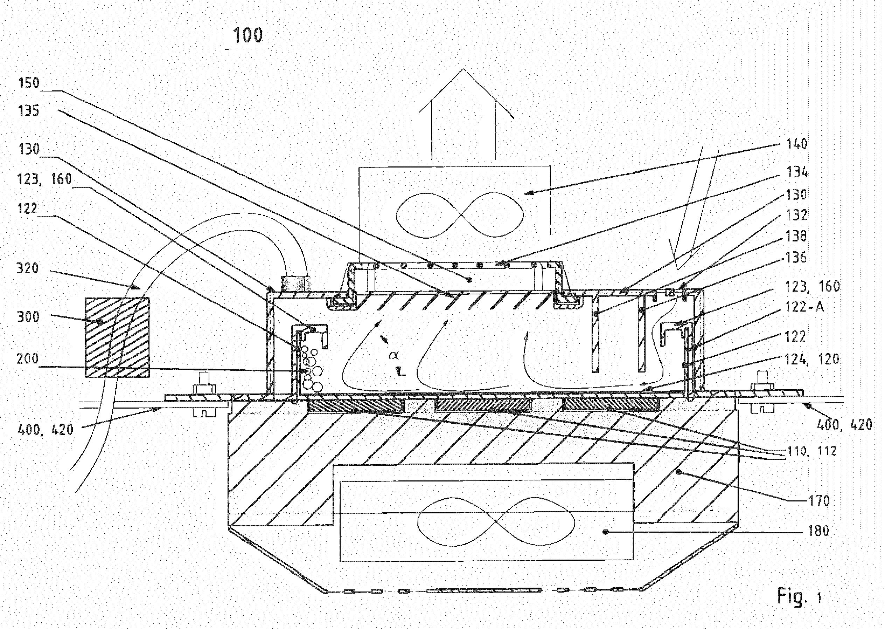

Figur 1 zeigt das erfindungsgemäße Entfeuchtungsgerät 100 für ein gasförmiges Medium, insbesondere für Luft. Das Entfeuchtungsgerät umfasst eine flächige Kühleinrichtung 110 mit einer Mehrzahl von eingelassenen Peltier-Elementen 112. Wenn die Peltier-Elemente mit Strom versorgt werden, generieren sie eine Kaltseite und eine Warmseite. Mit der Kaltseite ist eine Kondensatwanne 120 flächig verbunden. Konkret liegt die Bodenplatte 124 der Kondensatwanne 120 flächig auf der Kaltseite der Kühleinrichtung 110 auf. Die Ränder der Kondensatwanne stehen beispielhaft rechtwinklig von der Bodenplatte ab. Die Kondensatwanne ist typischerweise aus Metall. Aufgrund der wärmeleitenden Eigenschaften werden bei Kühlung der Bodenplatte die Ränder automatisch mit gekühlt. Die Kondensatwanne dient zum Auffangen von Kondenswasser, welches durch Kondensation aus der Luft im Inneren der Kondensatwanne und insbesondere an der gekühlten Bodenplatte und den gekühlten Rändern der Kondensatwanne gewonnen wird. Durch die Kondensation wird der Luft Wasser entzogen und die Luft wird auf diese Weise getrocknet.

Besonderes Merkmal der Erfindung sind Strömungsführungselemente in Form eines ersten Steges 136 und eines zweiten Steges 138, welche im Inneren der Kondensatwanne 120 zur Führung des Luftstroms entlang der Innenseiten des Randes 122 und der Bodenplatte 124 der Kondensatwanne dienen. Die beiden Stege 136, 138 sind an einer Haube 130 derart befestigt, dass wenn die Haube, wie in Figur 1 dargestellt, die Kondensatwanne überdeckt, in das Innere der Kondensatwanne hineinragen. Die beiden Stege sind allerdings bei aufgesetzter Haube in ihrer Länge so begrenzt, dass sie die Bodenplatte nicht berühren, sondern dass zwischen ihren Enden und der Bodenplatte jeweils noch ein Spalt zum Durchströmen der Luft verbleibt. In Strömungsrichtung hinter der Einlassöffnung 132 und den beiden Stegen 136, 138 ist in der Haube eine Auslassöffnung 134 für die Luft angeordnet. Die Auslassöffnung 134 weist ein Lamellengitter auf, in welchem eine Mehrzahl von Lamellen 135 parallel zueinander und - bei aufgesetzter Haube 130 - mit einem spitzen Winkel α gegenüber der Bodenplatte geneigt angeordnet sind, so dass sich der spitze Winkel α zu dem ersten und dem zweiten Steg 136, 138 hin öffnet, wie dies in Figur 1 dargestellt ist. Der Auslassöffnung 134 in Strömungsrichtung nachgeordnet kann ein Luftfilter 150 und ein erstes Gebläse 140 sein. Das erste Gebläse dient dann zum Erzeugen oder Verstärken der Strömung des gasförmigen Mediums bzw. der Luft im Innern der Kondensatwanne durch Ansaugen der Luft durch die Einlassöffnung 132 und an dem ersten und dem zweiten Steg 136, 138 vorbei.

Gemäß einem bevorzugten Ausführungsbeispiel ist auf den freien, d. h. der Kühleinrichtung abgewandten Seite des Randes 122 der Kondensatwanne ein Dichtungsring 160 aufgesetzt. Der Dichtungsring 160 dient zum Ausbilden eines zur Mitte der Kondensatwanne hin und optional auch zur Bodenplatte der Kondensatwanne hin eingezogenen bzw. verlängerten freien Endes des Randes der Kondensatwanne. Dieses eingezogene freie Ende des Randes dient dazu, ein Überschwappen bzw. Auslaufen von Kondenswasser aus der Kondensatwanne, insbesondere bei Bewegung oder Rotation der Kondensatwanne, wie sie beispielsweise bei Anordnung in einer Windturbine eines Windkraftrades auftreten kann, zu verhindern.

Neben seiner Funktion zur Ausbildung des eingezogenen Randes 123 kann der Dichtungsring 160 auch ausgebildet sein, die Außenseite 122-A des Randes 122 der Kondensatwanne 120 gegen Kondenswasser abdichtend zu bedecken. Durch diese konstruktive Maßnahme wird dann vorteilhafterweise erreicht, dass sich an der Außenseite 122-A des Randes kein Kondenswasser bildet.

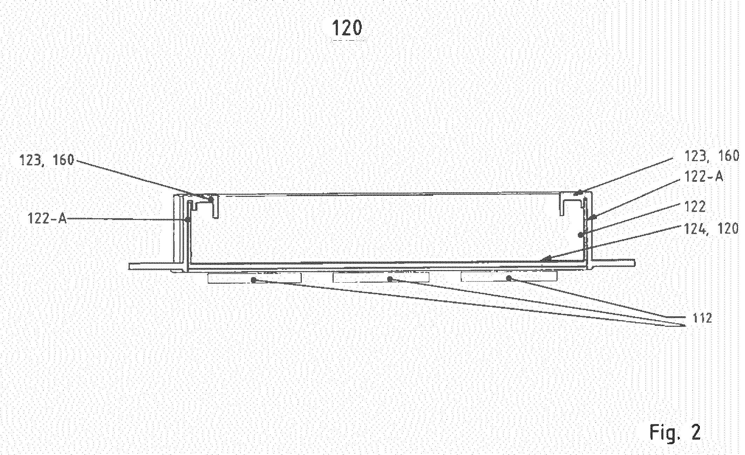

Fig. 2 zeigt den soeben beschriebenen Dichtungsring 160 im Zusammenwirken mit der Kondensatwanne 120 in vergrößerter Ansicht.

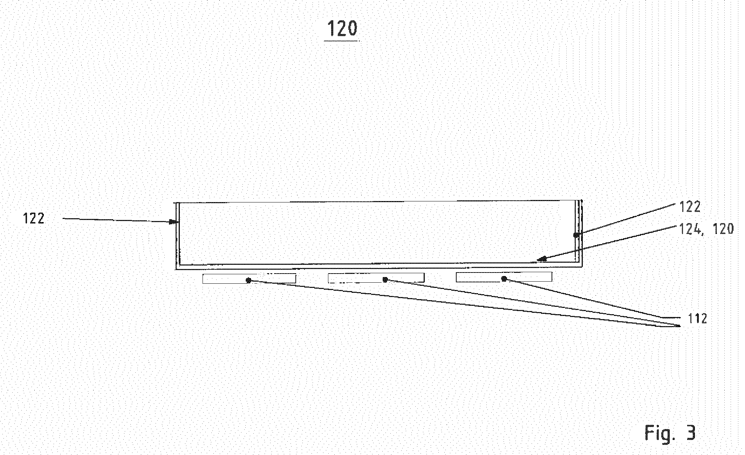

Fig. 3 zeigt die Kondensatwanne 120 in Kontakt mit den Peltier-Elementen 112, aber ohne den Dichtungsring 160.

Wie in Fig. 1 weiterhin zu erkennen ist, kann in der Kondensatwanne 120 angesammeltes Kondenswasser 200 über einen Schlauch 320 mit Hilfe einer Pumpe 300 abgesaugt werden. Die Kondensatpumpe 300 befindet sich normalerweise an dem Entfeuchtungsgerät, auf jeden Fall aber im Schaltschrank.

Durch den eingezogenen Rand 123 und Ausführung der Einlassöffnung 132 und Auslassöffnung 134 mit Filterelement 150 ist sichergestellt, dass auch bei einer Bewegung, insbesondere einer Rotation des Schaltschranks bzw. des Entfeuchtungsgerätes, wie sie bei Einbau in der Turbine eines Windkraftrades auftreten kann, kein Kondenswasser in das Innere des Schaltschrankes 400 gelangen kann. Das Kondenswasser kann nur über den Schlauch 320 nach außen ablaufen oder abgepumpt werden.

Auf ihrer Warmseite weist die Kühleinrichtung 110 vorzugsweise einen Kühlkörper 170 und weiter vorzugsweise auch ein zweites Gebläse 180 auf zum Abführen der generierten Wärme.

Zur Funktionsweise des erfindungsgemäßen Entfeuchtungsgerätes 100
Wie mit dem nach unten gerichteten Doppelpfeil in Figur 1 angedeutet, wird Luft insbesondere mit Hilfe des ersten Gebläses 140 durch die Einlassöffnung 132 in der Haube angesaugt. Die angesaugte Luft wird dann durch einen aus dem ersten Steg 136 und dem Rand 122 gebildeten Kanal dicht entlang der Innenseite des Randes 122 geführt bis zur Bodenplatte 124. Der zweite Steg 138, welcher im Wesentlichen parallel zu dem ersten Steg 136 und ebenfalls beabstandet zu der Bodenplatte 124 angeordnet ist, verhindert, dass sich die Luft bereits unmittelbar hinter dem ersten Steg 136 wieder von der Bodenplatte ablöst und in Richtung Auslassöffnung 134 strömt. Insofern strömt die Luft, wie in Figur 1 durch die Pfeile angedeutet, tatsächlich mehr oder weniger weit entlang der Bodenplatte, bevor sie sich von der Bodenplatte ablöst, um dann in eine Strömungsrichtung entsprechend dem Winkel α einzudrehen und parallel zu den Lamellen 135 aus der Auslassöffnung 134 auszutreten; siehe Doppelpfeile nach oben oberhalb des ersten Gebläses 140.

Durch die konstruktiven Besonderheiten in Form des ersten und zweiten Steges sowie der beschriebenen Anordnung der Lamellen wird erfindungsgemäß vorteilhafterweise erreicht, dass die Luft recht eng und zeitlich lange anhaltend entlang der Innenseiten der Kondensatplatte, insbesondere entlang deren Ränder und deren Bodenplatte entlangströmt, was vorteilhafterweise bewirkt, dass die Luft wirkungsvoll abgekühlt wird. Durch diese wirkungsvolle Abkühlung wird die Kondensation von Wasser aus der Luft und damit die Trocknung der Luft begünstigt.

Das erfindungsgemäße Entfeuchtungsgerät 100 wird vorteilhafterweise dazu verwendet, die Luft in einem Schaltschrank 400 für elektronische Komponenten zu entfeuchten bzw. zu trocknen, damit die elektronischen Komponenten keinen Schaden nehmen. Der Einbau in dem Schaltschrank 400 ist in Figur 1 symbolisch dargestellt; konkret ist zu erkennen, dass das Gerät in eine Öffnung in der Wand 420 des Schaltschrankes 400 eingeschraubt ist.

Das Entfeuchtungsgerät 100 ist in dem Schaltschrank so montiert, dass die Kondensatwanne 120 mit der Haube in das Innere des Schaltschrankes hineinragt, damit über die Einlassöffnung 132 Luft aus dem Schaltschrankinneren unter die Haube in das Innere der Kondensatwanne angesaugt werden kann. Gleichzeitig sind der Kühlkörper 170 und das zweite Gebläse 180 vorzugsweise außerhalb des Schaltschrankes angeordnet, um die Luft im Innern des Schaltschrankes nicht unerwünschterweise aufzuwärmen.

Vorteilhafterweise findet das erfindungsgemäße Entfeuchtungsgerät 100 Verwendung in einem Schaltschrank 400 für eine Windturbine einer Windkraftanlage.

### Bezugszeichenliste

- 100: Entfeuchtungsgerät
- 110: Kühleinrichtung
- 112: Peltier-Element
- 120: Kondensatwanne
- 122: Rand der Kondensatwanne
- 122-A: Außenseite des Randes
- 123: eingezogener Rand
- 124: Bodenplatte der Kondensatwanne
- 130: Haube
- 132: Einlassöffnung
- 134: Auslassöffnung
- 135: Lamellen
- 136: erster Steg
- 138: zweiter Steg
- 140: erstes Gebläse
- 150: Luftfilter
- 160: Dichtungsring
- 170: Kühlkörper
- 180: zweites Gebläse
- 200: Kondenswasser
- 300: Pumpe
- 320: Schlauch
- 400: Schaltschrank
- 420: Schaltschankwand
- α: spitzer Winkel

## Patentansprüche

1. Entfeuchtungsgerät (100) für ein gasförmiges Medium, mit:
einer Kühleinrichtung (110) zum Kühlen des gasförmigen Mediums; und
einer Kondensatwanne (120) zum Auffangen von aus dem gasförmigen Medium kondensierten Kondenswasser;
wobei die Kühleinrichtung (110) in wärmeleitendender Verbindung zu der Kondensatwanne (120) angeordnet ist zum Kühlen der Kondensatwanne so, dass in dem gasförmigen Medium enthaltenes Wasser an den Innenseiten der Kondensatwanne zu dem Kondenswasser kondensiert;
wobei eine die Kondensatwanne überdeckende Haube (130) vorgesehen ist mit einer Einlassöffnung (132) und einer Auslassöffnung (134) für das gasförmige Medium und mit mindestens einem Strömungsführungselement (136, 138) zum Leiten des gasförmigen Mediums unter der Haube (130) entlang der Innenseiten des Randes (122) und der Bodenplatte (124) der Kondensatwanne (120).
**dadurch gekennzeichnet, dass**
die Einlassöffnung (132) in der Haube (130) so angeordnet ist, dass - wenn die Haube über der Kondensatwanne (120) angeordnet ist - das gasförmige Medium im Bereich des Randes (122) der Kondensatwanne zumindest an einer Stelle in das Innere der Kondensatwanne eintritt; und
ein erstes Strömungsführungselement in Form eines ersten Steges (136) an der Haube (130) derart befestigt ist, dass es - wenn die Haube über der Kondensatwanne angeordnet ist - in geringem Abstand zumindest näherungsweise parallel zu dem Rand der Kondensatwanne verlaufend in die Kondensatwanne hineinragt zum Leiten der Strömung des durch die Einlassöffnung unter die Haube eintretenden gasförmigen Mediums entlang der Innenseiten des Randes (122) der Kondensatwanne (120) in Richtung auf die Bodenplatte(124).
dass ein zweites Strömungsführungselement in Form eines zweiten Steges (138), welcher im Wesentlichen parallel zu dem ersten Steg (136) verlaufend, weiter zur Mitte der Haube (130) und der Kondensatwanne (120) hin versetzt an der Haube befestigt ist.
dass der erste und zweite Steg (136, 138) - wenn die Haube über der Kondensatwanne angeordnet ist - beabstandet zur Bodenplatte sind.
dass der erste und zweite Steg (136, 138) auf dem Strömungsweg des gasförmigen Mediums zwischen der Einlassöffnung und der Auslassöffnung angeordnet sind.
und dass die Auslassöffnung ein Lamellengitter aufweist, in welchem die Lamellen (135) parallel zueinander und mit spitzem Winkel α gegenüber der Bodenplatte (124) geneigt angeordnet sind, so dass sich der spitze Winkel zu dem ersten und zweiten Steg (136, 138) hin öffnet.

2. Entfeuchtungsgerät (100) nach Anspruch 1, **dadurch gekennzeichnet, dass**
ein erstes Gebläse (140) vorgesehen ist zum Erzeugen oder Verstärken der Strömung des gasförmigen Mediums im Innern der Kondensatwanne (120) durch Ansaugen des gasförmigen Mediums durch die Einlassöffnung (132) unter die Haube (130).

3. Entfeuchtungsgerät (100) nach Anspruch 2, **dadurch gekennzeichnet, dass**
das erste Gebläse (140) - in Strömungsrichtung des gasförmigen Mediums gesehen - stromabwärts der Auslassöffnung (134) angeordnet ist.

4. Entfeuchtungsgerät (100) nach einem der Ansprüche 2 oder 3, **dadurch gekennzeichnet, dass**
zwischen dem Lamellengitter und dem ersten Gebläse (140) ein Luftfilter (150) angeordnet ist.

5. Entfeuchtungsgerät (100) nach einem der vorangegangenen Ansprüche, **gekennzeichnet durch**
einen Dichtungsring (160) zum Aufsetzen auf das der Bodenplatte abgewandte freie Ende des Randes (122) der Kondensatwanne und zum Ausbilden eines zum Innern der Kondensatwanne hin eingezogenen Randes (123)der Kondensatwanne.

6. Entfeuchtungsgerät (100) nach Anspruch 5, **dadurch gekennzeichnet, dass**
der Dichtungsring (160) ausgebildet ist, die Außenseite (122-A) des Randes der Kondensatwanne gegen Kondenswasser abdichtend zu bedecken.

7. Entfeuchtungsgerät (100) nach einem der vorangegangenen Ansprüche, **dadurch gekennzeichnet, dass**
die Kühleinrichtung (110) aus mindestens einem Peltierelement (112) gebildet ist und auf Ihrer der Kondensatwanne abgewandten Warmseite einen Kühlkörper (170) aufweist.

8. Entfeuchtungsgerät (100) nach Anspruch 7, **dadurch gekennzeichnet, dass**
ein zweites Gebläse (180) vorgesehen ist zum Abführen der Wärme von dem Kühlkörper (170).

9. Schaltschrank (190) für elektronische Komponenten mit einem Entfeuchtungsgerät (100) nach einem der vorangegangenen Ansprüche, wobei das Entfeuchtungsgerät in dem Schaltschrank (190) so angeordnet ist, dass die Kondensatwanne (120) mit der Haube (130) in das Innere des Schaltschrankes hineinragt und der Kühlkörper (170) für die Kühleinrichtung (110) außerhalb des Schaltschrankes (190) angeordnet ist.

10. Verwendung des Schaltschrankes nach Anspruch 9 bei einer drehbaren Windturbine, wobei der Schaltschrank (400) die elektronischen Komponenten aufweist zum Umformen der von der Windturbine gelieferten elektrischen Energie.

## Claims

1. A dehumidifier (100) for a gaseous medium, comprising:
a cooling unit (110) for cooling the gaseous medium; and a condensate tray (120) for collecting condensation water condensed from the gaseous medium;
wherein the cooling unit (110) is arranged in heat-conductive connection to the condensate tray (120) for cooling the condensate tray in such a way that water contained in the gaseous medium condenses on the inner sides of the condensate tray to form the condensation water;
wherein a hood (130) is provided which covers the condensate tray and comprises an inlet opening (132) and an outlet opening (134) for the gaseous medium and comprises at least one flow guiding element (136, 138) for guiding the gaseous medium under the hood (130) along the inner sides of the edge (122) and the base plate (124) of the condensate tray (120),
**characterized in that**
the inlet opening (132) in the hood (130) is arranged such that, when the hood is arranged above the condensate tray (120), the gaseous medium enters the interior of the condensate tray at least at one location in the region of the edge (122) of the condensate tray; and
a first flow guiding element in the form of a first web (136) is fastened to the hood (130) in such a manner that, when the hood is arranged above the condensate tray, it projects into the condensate tray at least approximately parallel to the edge of the condensate tray, at a small distance therefrom, for guiding the flow of the gaseous medium entering under the hood through the inlet opening along the inner sides of the edge (122) of the condensate tray (120) in the direction towards the bottom plate (124),
that a second flow guiding element in the form of a second web (138), which runs substantially parallel to the first web (136), is fastened to the hood to be offset further towards the center of the hood (130) and the condensate tray (120),
that the first and second webs (136, 138) are spaced apart from the base plate when the hood is arranged above the condensate drip tray,
that the first and second webs (136, 138) are arranged on the flow path of the gaseous medium between the inlet opening and the outlet opening,
and **in that** the outlet opening comprises a lamella grid in which the lamellae (135) are arranged parallel to each other and inclined at an acute angle α with respect to the bottom plate (124) so that the acute angle opens toward the first and second webs (136, 138) .

2. The dehumidifier (100) according to claim 1,
**characterized in that**
a first fan (140) is provided for generating or amplifying the flow of the gaseous medium inside the condensate tray (120) by sucking the gaseous medium through the inlet opening (132) under the hood (130).

3. The dehumidifier (100) according to claim 2,
**characterized in that**
the first fan (140) is arranged downstream of the outlet opening (134) as seen in the flow direction of the gaseous medium.

4. The dehumidifier (100) according to any one of claims 2 or 3,
**characterized in that**
an air filter (150) is arranged between the lamella grid and the first fan (140).

5. The dehumidifier (100) according to any one of the preceding claims,
**characterized by**
a sealing ring (160) for placing on the free end of the edge (122) of the condensate tray facing away from the bottom plate and for forming an edge (123) of the condensate tray retracted toward the inside of the condensate tray.

6. The dehumidifier (100) according to claim 5,
**characterized in that**
the sealing ring (160) is formed to sealingly cover the outer side (122-A) of the edge of the condensate tray against condensation water.

7. The dehumidifier (100) according to any one of the preceding claims, **characterized in that** the cooling unit (110) is formed from at least one Peltier element (112) and has a heat sink (170) on its warm side facing away from the condensate tray.

8. The dehumidifier (100) according to claim 7,
**characterized in that**
a second fan (180) is provided for dissipating the heat from the heat sink (170).

9. A switch cabinet (190) for electronic components, comprising a dehumidifier (100) according to any one of the preceding claims, wherein the dehumidifier is arranged in the switch cabinet (190) such that the condensate tray (120) projects with the hood (130) into the interior of the switch cabinet and the heat sink (170) for the cooling unit (110) is arranged outside the switch cabinet (190).

10. A use of the switch cabinet according to claim 9 in a rotatable wind turbine, wherein the switch cabinet (400) comprises the electronic components for converting the electrical energy supplied by the wind turbine.

## Revendications

1. Appareil de déshumidification (100) pour un milieu gazeux, avec :
un système de refroidissement (110) pour refroidir le milieu gazeux et un bac de condensat (120) pour recueilir de l'eau de condensation condensée du milieu gazeux,
le système de refroidissement (110) étant disposé en liaison thermo-conductrice avec le bac de condensat (120) pour refroidir le bac de condensat de telle manière que l'eau contenue dans le milieu gazeux se condense sur les côtés intérieurs du bac de condensat en eau de condensation,
un capot (130) recouvrant le bac de condensat étant prévu avec une ouverture d'entrée (132) et une ouverture de sortie (134) pour le milieu gazeux et avec au moins un élément de guidage d'écoulement (136,138) pour diriger le milieu gazeux sous le capot (130) le long des côtés intérieurs du bord (122) et de la plaque de fond (124) du bac de condensat (120),
**caractérisé en ce que**
l'ouverture d'entrée (132) dans le capot (130) est disposée de telle manière que, si le capot est disposé au-dessus du bac de condensat (120), le milieu gazeux dans la zone du bord (122) du bac de condensat pénètre au moins à un endroit à l'intérieur du bac de condensat, et
un premier élément de guidage découlement sous la forme d'une première membrure (136) est fixé sur le capot (130) de telle manière que, si le capot est disposé au-dessus du bac de condensat, il pénètre d'une faible distance dans le bac de condensat, en passant au moins presque parallèlement au bord du bac de condensat, pour diriger l'écoulement du milieu gazeux pénétrant par l'ouverture d'entrée sous le capot le long des côtés intérieurs du bord (122) du bac de condensat (120) en direction de la plaque de fond (124),
**en ce qu'**un deuxième élément de guidage d'écoulement sous la forme d'une deuxième membrure (138), lequel passant pour l'essentiel parallèlement à la première membrure (136), est fixé sur le capot, décalé plus loin vers le milieu du capot (130) et du bac de condensat (120),
**en ce que** la première et la deuxième membrure (136,138), si le capot est disposé au-dessus du bac de condensat, sont à distance de la plaque de fond,
**en ce que** la première et la deuxième membrure (136,138) sont disposées entre l'ouverture d'entrée et l'ouverture de sortie sur la trajectoire d'écoulement du milieu gazeux,
**et en ce que** l'ouverture de sortie comprend un grille à lamelles dans laquelle les lamelles (135) sont disposées parallèlement les unes aux autres et inclinées avec un angle aigu α par rapport à la plaque de fond (124) de telle manière que l'angle aigu s'ouvre vers la première et la deuxième membrure (136,138) .

2. Appareil de déshumidification (100) selon la revendication 1, **caractérisé en ce qu'**une première soufflante (140) est prévue pour générer ou renforcer l'écoulement du milieu gazeux à l'intérieur du bac de condensat (120) par aspiration du milieu gazeux par l'ouverture d'entrée (132) sous le capot (130).

3. Appareil de déshumidification (100) selon la revendication 2, **caractérisé en ce que** la première soufflante (140), vue dans la direction d'écoulement du milieu gazeux, est disposée en aval de l'ouverture de sortie (134).

4. Appareil de déshumidification (100) selon l'une quelconque des revendications 2 ou 3, **caractérisé en ce qu'**un filtre d'air (150) est disposé entre la grille à lamelles et la première soufflante (140).

5. Appareil de déshumidification (100) selon l'une quelconque des revendications précédentes, **caractérisé par** une bague d'étanchéité (160) à poser sur la première extrémité libre du bord (122) du bac de condensat, opposée à la plaque de fond et pour constituer un bord (123) rentré vers l'intérieur du bac de condensat du bac de condensat.

6. Appareil de déshumidification (100) selon la revendication 5, **caractérisé en ce que** la bague d'étanchéité (160) est constituée pour couvrir hermétiquement envers l'eau de condensation le côté extérieur (122-A) du bord du bac de condensat.

7. Appareil de déshumidification (100) selon l'une quelconque des revendications précédentes, **caractérisé en ce que** le système de refroidissement (110) est formé d'au moins un élément Peltier (112) et comporte un corps de refroidissement (170) sur son côté chaud opposé au bac de condensat.

8. Appareil de déshumidification (100) selon la revendication 7, **caractérisé en ce qu'**une deuxième soufflante (180) est prévue pour évacuer la chaleur du corps de refroidissement (170).

9. Armoire de commande (190) pour composants électroniques avec un appareil de déshumidification (100) selon l'une quelconque des revendications précédentes, l'appareil de déshumidification étant disposé dans l'armoire de commande (190) de telle manière que le bac de condensat (120) avec le capot (130) pénètre à l'intérieur de l'armoire de commande et le corps de refroidissement (170) pour le système de refroidissement (110) est disposé en dehors de l'armoire de commande (190).

10. Utilisation de l'armoire de commande selon la revendication 9, pour une turbine éolienne, l'armoire de commande (400) comportant les composants électroniques pour transformer l'énergie électrique fournie par la turbine éolienne.
